# EUROPEAN PATENT SPECIFICATION

(11) **EP 0 514 091 B1**
(45) Date of publication and mention of the grant of the patent: **10.09.1997**
(21) Application number: 92304166.9
(22) Date of filing: 08.05.1992
(51) Int. Cl.: G02B 6/44

(54) **Fibre optic cable**
Optisches Kabel
Câble fibre optique

(30) Priority: 11.05.1991 GB 9110264
(43) Date of publication of application: 19.11.1992
(73) Proprietor: PIRELLI GENERAL plc, London W1X 6BU (GB)
(72) Inventor: Summers, Andrew Thomas, Newport, Gwent (GB); Shackleton, Nigel, Newport, Gwent NP44 5AD (GB); Brewer, David Andre, Newport, Gwent NP1 7ED (GB)
(74) Representative: Abbie, Andrew Kenneth

(56) References cited:
- EP-A- 0 020 036
- EP-A- 0 171 841
- EP-A- 0 255 763
- EP-A- 0 278 648
- DE-A- 2 727 315
- DE-A- 3 637 603
- DE-A- 3 840 353
- FR-A- 2 562 272
- PATENT ABSTRACTS OF JAPAN vol. 10, no. 183 (P-472)(2239) 26 June 1986 & JP-A-61 032 014

## Description

This invention relates to optical fibre cables.

A recent development in the optical fibre cable field has been the introduction of self-supporting or aerial cables in which fibre elements are loosely contained in one or more channels found in a strength member. As these cables are generally installed along electrical power lines it is necessary to provide a wholly dielectric construction which therefore precludes the use of metallic strength members. Conventionally the necessary strength is provided by the channel member itself which may be formed e.g. from a glass fibre reinforced plastics material by a pultrusion process. Such a material is relatively costly to manufacture and, whilst it provides a reliable high strength cable, the tensile properties of the cable exceed significantly the properties required for relatively short span applications. This has somewhat restricted the short span cable market where purchasers are naturally unwilling to pay for cables of a higher quality than that justified for their requirements.

FR-A-2562272, cited during the examination of this application, discloses an optical fibre cable, comprising a longitudinal plastics body having a closed channel or duct, at least one optical fibre element contained within said channel or duct, and strengthening means comprising at least one longitudinal dielectric strength member disposed within and bonded to the longitudinal plastics body, said body comprising an inner portion and an outer portion surrounding said inner portion.

DE-A-3637603, cited during the examination of this application, discloses an optical fibre cable comprising a plastics inner member having a closed channel in which an optical fibre element is disposed, and a mantle comprising a layer of aramid fibres coated on both sides with adhesive material which forms an adhesive bond with an outer plastics sheath and the inner member.

An object of the invention is to provide an optical fibre cable as defined in the last but one preceding paragraph in which said outer portion is bonded to said inner portion, the bond between said inner portion and said outer portion being a weak bond such that said outer portion is peelable from said inner portion.

Preferably, said cable is an aerial cable, said strengthening means comprises a strength member having a generally circular cross-section, said body portions are made of unreinforced plastics, said at least one optical fibre element comprises at least one fibre optic ribbon and an excess length thereof is disposed within said closed channel or duct, and said plastics body has at least one region of weakness adjacent said channel or duct to facilitate selective splitting of the body to provide access to the fibre ribbon or ribbons in the channel or duct.

Preferably, said strength member is disposed within and bonded to said inner body portion.

Preferably, said inner body portion is generally circular in cross-section, and a plurality of said strength members are generally symmetrically disposed within and bonded to the outer body portion whereby the outer body portion provides support for the inner body portion and whereby, in use, the outer and inner body portions may be separated to expose the fibre element or elements.

The at least one strength member may comprise a glass reinforced plastics rod or an aramid fibre rod.

The fibre element containing channel may follow a generally helical path within the cable, and said helical path may comprise alternate left-handed and right-handed helices.

Advantageously the cable is manufactured by the one-shot extrusion process described in our co-pending European Application No. EP-A-0584129 of even date.

In order that the invention may be well understood, two embodiments thereof, which are given by way of example only, will now be described with reference to the accompanying drawings, in which:
Fig. 1 is a cross-sectional view of a fibre optic cable incorporating a dielectric strength, or strain, member;
Fig. 2 is a sectional part-schematic view of an extruder for manufacturing the cable of Fig. 1;
Fig. 2a is an enlarged view of a portion of Fig. 2, showing a tool or point assembly of the extruder;
Fig. 3 is a perspective view showing the tool or point assembly; and
Fig. 4 is a cross-sectional view of another fibre optic cable.

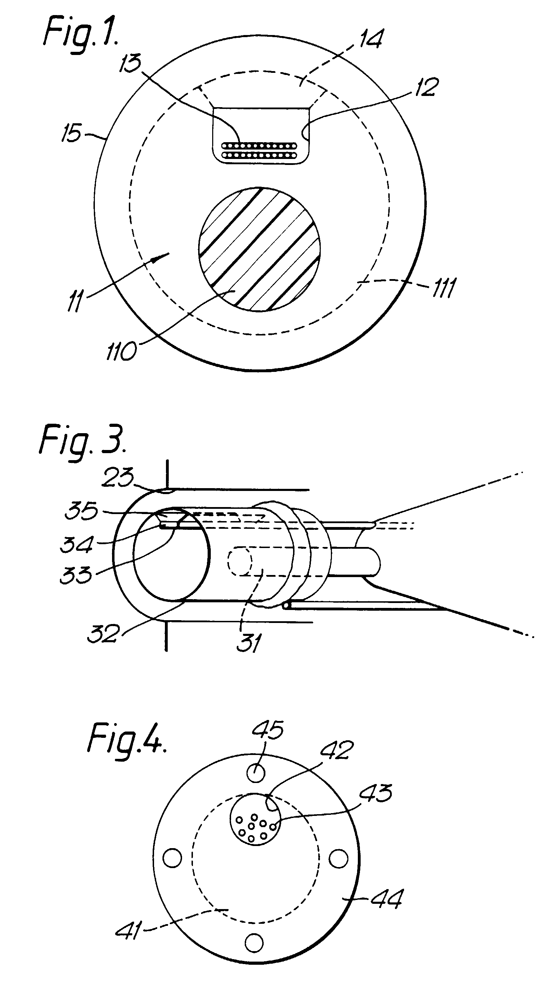

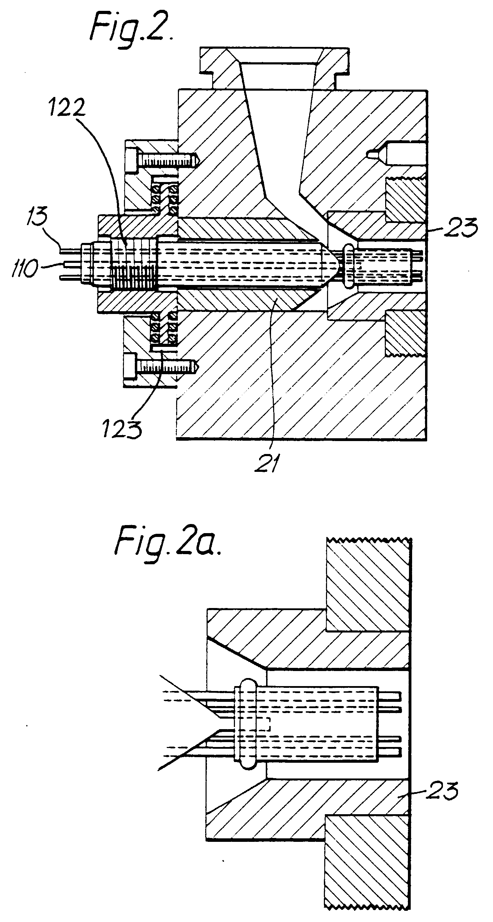

Referring now to the drawings, Fig. 1 shows an optical fibre cable which comprises a longitudinal plastics body having a closed channel, or duct, 12. Two optical fibre elements 13 are contained within the channel 12 and strengthening means comprising a longitudinal dielectric strength member 110 is disposed within and bonded to the longitudinal plastics body. The body comprises an inner portion 111 and an outer portion 15 surrounding the inner portion 111. The outer portion 15 is bonded weakly to the inner portion 111 such that the outer portion 15 is separable from the inner portion 111. The cable in the embodiment of Fig. 1 is for use as an aerial cable.

Typically the or each fibre element 13 comprises a ribbon fibre and two such ribbon fibres are shown in the embodiment of Fig. 1. The length of the or each fibre element 13 exceeds that of the body to prevent strain on the or each elements 13 when the cable is in use. Advantageously the or each element 13 follows an undulating path within the channel 12.

In some applications the channel 12 may be filled with a water blocking grease or gel composition. It will also be appreciated that a number of channels 12, each for receiving optical fibre, or fibre optic, elements 13, may be provided.

The inner body portion 111 and the longitudinal dielectric strength member 110 which is formed e.g. from a glass-fibre reinforced plastics material or from an aramid fibre constitute a channel member 11. The channel 12 is formed in an outer non-reinforced plastics region of the channel member 11, i.e. in the inner body portion 111. The strength member 110 and the outer region 111 are securely bonded together.

In the embodiment of Fig. 1, the body also comprises a strip member, or closure strip, 14 and the channel 12 containing the fibre elements 13 is sealed by this closely fitting strip member 14 whereby to prevent leakage of water-blocking material from the channel 12.

Regions of weakness comprising, for example, weak bonds at respective interfaces between the closure strip 14 and the inner body portion 111, are disposed adjacent the channel 12 to facilitate selective splitting of the body to provide access to the fibre ribbons 13 in the channel 12.

The closure strip 14 is retained in position over the channel 12 by the plastics outer-body portion, or sheath, 15.

The inner body portion 111 and the outer body portion 15 may each be made from a plasticised polyvinyl chloride (PVC), a low smoke zero halogen material or a thermoplastics rubber.

Advantageously the cable construction of Fig. 1 is manufactured by an extrusion process. A suitable extruder is depicted schematically in Figures 2, 2a and 3 of the accompanying drawings. For clarity Fig. 2 shows only those parts of the extruder necessary for an understanding of the manufacturing process.

Referring to Fig. 2, a preformed strength member 110 is fed into the extruder point 21 whereby to be extrusion coated with a plastics material. At least one optical fibre ribbon element 13 is also fed into the point region at a rate slightly greater than the feed rate of the strength member 110. This ensures that an excess ribbon length will be provided in the finished cable

Plastics material is extruded around the point and through the die 23 which defines the outer diameter of the extruded cable.

Figs. 2a and 3 show the point assembly of the extruder of Fig. 2. The assembly includes a short inner tubular member 31 of suitable diameter for receiving the strength member 110. An outer generally cylindrical shield member 32 extends axially past the free end of the tubular member 31 and part way through the throat of the die 23. The assembly also includes an inner longitudinal member 33 of generally rectangular cross-section whereby the channel 12 of the cable is defined. The or each fibre ribbon element is fed through a longitudinal bore 34 in the member 33 so as to be directed into the corresponding channel formed in the cable.

The rectangular member 33 is supported by flat plate members 35 extending from the inner surface of the cylindrical shield 32.

The purpose of the cylindrical shield 32 and the plates 35 is to provide a surface barrier between regions of extruding plastics material within the die throat. We have found that, by separating the plastics flow through the die region, the rejoined flows extruding from the die form a relatively weak bond therebetween. The bond is however of sufficient strength to prevent slippage between the inner and outer portions of the cable when a strain is applied to the cable. In the finished cable, this facilitates selective removal of the sheath 15 and the closure strip 14 to gain access to the fibre element 13 e.g. to connect to that element.

Axial or linear adjustment of the position of the point assembly relative to the die throat may be provided by co-operating screw threads 122 (Fig. 2) on the point assembly and extruder head. Rotational movement of the point assembly e.g. to introduce an S/Z twist of the channel 12 and the optical fibre, or transmission, elements 13 may be provided by a bearing 123 (Fig. 2) mounted on the extruder head which bearing carries the point assembly.

In use the axial position of the point assembly relative to the die throat is adjusted to balance or equalise the flow of plastics material within and outside the shield 21. This ensures void-free manufacture of the cable.

Single step or 'one-shot' extrusion processes are discussed in our aforementioned Application No. EP-A-0584129 which describes this extrusion technique and apparatus in further detail.

The cable construction of Fig. 1 may also be prepared by a multi-stage process, such as that described in our United Kingdom specification No. GB-A-2 201008. In that process the channel member 11 is formed in a first stage. Next the fibre element 13 is fed into the channel 12 in the channel portion 11 and the closure strip 14 is applied to seal the channel 12. The assembly is then provided with an external sheath 15 via an extrusion process, to form the finished cable.

A further cable construction is shown in Fig. 4. This is a crush-proof construction which comprises an inner plastics body portion, or member, 41 having a longitudinal channel, or duct, 42 containing a plurality of optical fibre elements 43, and an outer body portion, or sheathing plastics member, 44. A plurality of, typically four, reinforced strength members 45 are symmetrically disposed within and bonded to the outer body portion 44.

The outer body portion 44 surrounds the inner body portion 41 and is bonded weakly thereto, such that the outer body portion 44 is separable from the inner body portion 41. The outer body portion 44 provides support for the inner body portion 41.

Advantageously, the channel 42 containing the fibre elements 43 follows an alternately right-handed and left-handed helical path (an S-Z path) within the inner member 41.

The sheathing member 44 may be extruded together with the inner member 41 by a method similar to the method described above so as to provide a weak bond between the members 41 and 44, or the sheathing member 44 may comprise a separate extrusion. Access to the fibre elements 43 is effected by cutting the outer member 44 and peeling that member back to expose the fibre elements 43 in the channel 42.

It will be appreciated that although the cable constructions described above are intended for installation on electric power pylons, they are not limited to that application. They may for example be employed as land cables along motorways and railway lines.

## Claims

1. An optical fibre cable, comprising a longitudinal plastics body having a closed channel or duct (12, 42), at least one optical fibre element (13, 43) contained within said channel or duct (12, 42), and strengthening means comprising at least one longitudinal dielectric strength member (110, 45) disposed within and bonded to the longitudinal plastics body, said body comprising an inner portion (111, 41) and an outer portion (15, 44) surrounding said inner portion (111, 41), characterized in that said outer portion (15, 44) is bonded to said inner portion (111,41), the bond between said inner portion (111, 41) and said outer portion (15, 44) being a weak bond such that said outer portion (15, 44) is peelable from said inner portion (111, 41).

2. A cable as claimed in claim 1, wherein said cable is an aerial cable, said strengthening means comprises a strength member (110) having a generally circular cross-section, said body portions (111, 15) are made of unreinforced plastics, said at least one optical fibre element comprises at least one fibre optic ribbon (13) and an excess length thereof is disposed within said closed channel or duct (12), and wherein said plastics body has at least one region of weakness adjacent said channel or duct (12) to facilitate selective splitting of the body to provide access to the fibre ribbon or ribbons (13) in the channel or duct (12).

3. A cable as claimed in claim 2, wherein said strength member (110) is disposed within and bonded to said inner body portion (111).

4. A cable as claimed in claim 1, wherein said inner body portion (41) is generally circular in cross-section, and a plurality of said strength members (45) are generally symmetrically disposed within and bonded to the outer body portion (44) whereby the outer body portion (44) provides support for the inner body portion (41) and whereby, in use, the outer and inner body portions (44 and 41) may be separated to expose the fibre element or elements (43).

5. A cable as claimed in any one of the preceding claims, wherein said at least one strength member (110, 45) comprises a glass reinforced plastics rod or an aramid fibre rod.

6. A cable as claimed in any one of the preceding claims, wherein the channel or duct (12, 42) follows a generally helical path within the cable.

7. A cable as claimed in claim 6, wherein said helical path comprises alternate left-handed and right-handed helices.

## Patentansprüche

1. Lichtleitfaserkabel mit einem länglichen Kunststoffkörper, der einen geschlossenen Kanal oder eine geschlossene Durchführung (12, 42) aufweist, mit wenigstens einem Lichtleitfaserelement (13, 43), das innerhalb des Kanals oder der Durchführung (12, 42) enthalten ist, und einer Verstärkungseinrichtung, die wenigstens ein längliches dielektrisches Verstärkungselement (110, 45) aufweist, das innerhalb des länglichen Kunststoffkörpers angeordnet und mit diesem verbunden ist, wobei der Körper einen Innenabschnitt (111, 41) und einen Außenabschnitt (15, 44) umfaßt, der den Innenabschnitt (111, 41) umgibt, dadurch gekennzeichnet, daß der Außenabschnitt (15, 44) mit dem Innenabsschnitt (111, 41) verbunden ist, wobei die Verbindung zwischen dem Innenabschnitt (111, 41) und dem Außenabschnitt (15, 44) eine schwache Verbindung ist, so daß der Außenabschnitt (15, 44) von dem Innenabschnitt (111, 41) abschälbar ist.

2. Kabel nach Anspruch 1, wobei das Kabel ein Luftkabel ist, die Verstärkungseinrichtung ein Verstärkungselement (110) mit einem insgesamt kreisförmigen Querschnitt umfaßt, die Körperabschnitte (111, 15) aus unverstärktem Kunststoff hergestellt sind, das wenigstens eine Lichtleitfaserelement wenigstens ein Lichtleitfaserband (13) umfaßt und sein überstehendes Ende innerhalb des geschlossenen Kanals oder der Durchführung (12) angeordnet ist, und wobei der Kunststoffkörper wenigstens einen Schwächungsbereich aufweist, der an den Kanal oder die Durchführung (12) angrenzt, um ein wahlweises Teilen des Körpers zu erleichtern, um einen Zugang zu dem Faserband oder zu den Faserbändern (13) in dem Kanal oder der Durchführung (12) zu schaffen.

3. Kabel nach Anspruch 2, bei dem das Befestigungselement (110) innerhalb des inneren Körperabschnitts (111) angeordnet und mit diesem verbunden ist.

4. Kabel nach Anspruch 1, bei dem der innere Körperabschnitt (41) im Querschnitt insgesamt kreisförmig ist und mehrere der Verstärkungselemente (45) insgesamt symmetrisch innerhalb des äußeren Körperabschnitts (44) angeordnet und mit diesem verbunden sind, wodurch der äußere Körperabschnitt (44) eine Unterstützung des inneren Körperabschnitts (41) schafft und weshalb der äußere und der innere Körperabschnitt (44 und 41) im Einsatz getrennt werden können, um das Faserelement oder die Faserelemente (43) freizugeben.

5. Kabel nach einem der vorhergehenden Ansprüche, bei dem das wenigstens eine Verstärkungselement (110, 45) ein glasverstärktes Kunststoffstäbchen oder ein Aramidfaserstäbchen umfaßt.

6. Kabel nach einem der vorhergehenden Ansprüche, bei dem der Kanal oder die Durchführung (12, 42) einem insgesamt schraubenförmigen Weg innerhalb des Kabels folgt.

7. Kabel nach Anspruch 6, bei dem der schraubenförmige Weg abwechselnd linksgängige und rechtsgängige Schraubenlinien umfaßt.

## Revendications

1. Câble à fibre optique, comprenant un corps longitudinal en matière plastique comportant un canal ou conduit fermé (12, 42), au moins un élément formant fibre optique (13, 43) contenu dans ledit canal ou conduit (12, 42), et un moyen de renforcement comprenant au moins un élément de renforcement diélectrique longitudinal (110, 45) disposé dans le corps longitudinal en matière plastique et adhérant à ce corps, ledit corps comprenant une partie intérieure (111, 41) et une partie extérieure (15, 44) entourant ladite partie intérieure (111, 41), caractérisé en ce que ladite partie extérieure (15, 44) adhère à ladite partie intérieure (111, 41), la liaison entre ladite partie intérieure (111, 41) et ladite partie extérieure (15, 44) étant une liaison faible, de sorte que ladite partie extérieure (15, 44) peut être séparée par pelage de ladite partie intérieure (111, 41).

2. Câble selon la revendication 1, dans lequel ledit câble est un câble aérien, ledit moyen de renforcement comprend un élément de renforcement (110) ayant une section transversale, circulaire d'une façon générale, lesdites parties de corps (111, 15) sont formées d'une matière plastique non renforcée, ledit élément formant fibre optique au nombre d'au moins un comprend au moins un ruban (13) de fibres optiques (13) et une longueur excédentaire de ce ruban est disposée dans ledit canal ou conduit fermé (12), et dans lequel ledit corps en matière plastique comporte au moins une région affaiblie adjacente audit canal ou conduit (12) pour faciliter une scission sélective du corps afin d'avoir accès au ruban ou aux rubans (13) de fibres se trouvant dans le canal ou conduit (12).

3. Câble selon la revendication 2, dans lequel ledit élément de renforcement (110) est disposé dans ladite partie de corps intérieure (111) et adhère à cette partie.

4. Câble selon la revendication 1, dans lequel ladite partie de corps intérieure (41) a une section transversale circulaire d'une façon générale, et une pluralité desdits éléments de renforcement (45) sont disposés symétriquement, d'une façon générale, dans la partie de corps extérieure (44) et adhèrent à cette partie, la partie de corps extérieure (44) assurant ainsi un support à la partie de corps intérieure (41) et, pendant l'utilisation, les parties de corps extérieure et intérieure (44 et 41) pouvant être séparées pour découvrir l'élément ou les éléments formant fibre(s) (43).

5. Câble selon l'une quelconque des revendications précédentes, dans lequel ledit élément de renforcement (110, 45), au nombre d'au moins un, comprend une tige en matière plastique renforcée par du verre ou une tige en fibre aramide.

6. Câble selon l'une quelconque des revendications précédentes, dans lequel le canal ou conduit (12, 42) suit un trajet, hélicoïdal d'une façon générale, dans le câble.

7. Câble selon la revendication 6, dans lequel ledit trajet hélicoïdal comprend des hélices alternées de pas à gauche et de pas à droite.
